# EUROPEAN PATENT APPLICATION

(11) **EP 4 450 304 A1**
(43) Date of publication of application: **23.10.2024**
(21) Application number: 22907232.7
(22) Date of filing: 01.12.2022
(51) Int. Cl.: B60G 11/44

(54) **SUSPENSION DEVICE**

(30) Priority: 15.12.2021 JP 2021203026
(71) Applicant: NHK Spring Co., Ltd., Yokohama-shi, Kanagawa 236-0004 (JP)
(72) Inventor: TANAKA Yusuke, Yokohama-shi, Kanagawa 236-0004 (JP); HAYASHI Takanori, Yokohama-shi, Kanagawa 236-0004 (JP); IINO Shinji, Yokohama-shi, Kanagawa 236-0004 (JP); SANO Takamichi, Yokohama-shi, Kanagawa 236-0004 (JP)
(74) Representative: V.O.
(86) International application number: PCT/JP2022/044407
(87) International publication number: WO 2023/112704

(57) **Abstract**

A suspension device (1) includes a pair of leaf springs (11) which extend in a front-rear direction, are disposed to be spaced apart from each other in a left-right direction, are attached to a vehicle body (B1), and are configured to support an axle (W), and a torsion bar (12) which extends in the front-rear direction, and of which one of a front end portion and a rear end portion is supported by the axle in a state where movement in the front-rear direction and the left-right direction is restricted, in which one of a front end portion and a rear end portion of the leaf spring is connected to the vehicle body to be rotatable around a first axis (O1) extending in the left-right direction, and the other of the front end portion and the rear end portion of the leaf spring is connected to the vehicle body to be swingable in the front-rear direction around an axis extending in the left-right direction, and the other of the front end portion and the rear end portion of the torsion bar is supported by the vehicle body to be movable in the front-rear direction in a state where movement in the left-right direction is restricted.

## Description

### [Technical Field]

The present invention relates to a suspension device.

Priority is claimed on Japanese Patent Application No. 2021-203026, filed December 15, 2021, the content of which is incorporated herein by reference.

### [Background Art]

In the related art, for example, as shown in Patent Document 1 below, a suspension device including a pair of leaf springs which extend in a front-rear direction, are disposed to be spaced apart from each other in a left-right direction, are attached to a vehicle body, and support an axle, and a torsion bar which extends in the front-rear direction and has a rear end portion supported by the axle is known. In this suspension device, a front end portion of the leaf spring is connected to the vehicle body to be rotatable around an axis extending in the left-right direction, a rear end portion of the leaf spring is connected to the vehicle body to be swingable in the front-rear direction around an axis extending in the left-right direction, and a front end portion of the torsion bar is supported by the vehicle body via a rubber bush.

### [Citation List]

### [Patent Document]

[Patent Document 1] Japanese Examined Utility Model Application, Second Publication No. S49-009291

### [Summary of Invention]

### [Technical Problem]

In the suspension device of the related art, the front end portion of the torsion bar is supported by the vehicle body via the rubber bush. Therefore, when the vehicle body and the axle are moved relative to each other in the up-down direction while bending and deforming the leaf spring in the up-down direction, displacement of the front end portion of the torsion bar in the front-rear direction is suppressed, and the expansion and contraction deformation of the leaf spring in the front-rear direction is suppressed. As a result, there is a possibility that, when the vehicle body and the axle are moved relative to each other in the up-down direction, the leaf spring may not be deformed as designed, and the smooth relative movement of the vehicle body and the axle in the front-rear direction may be hindered, which may deteriorate the riding comfort.

The present invention has been made in consideration of such circumstances, and an object thereof is to provide a suspension device capable of deforming a leaf spring as designed when a vehicle body and an axle are moved relative to each other in an up-down direction.

### [Solution to Problem]

A suspension device according to an aspect of the present invention includes a pair of leaf springs which extend in a front-rear direction, are disposed to be spaced apart from each other in a left-right direction, are attached to a vehicle body, and are configured to support an axle, and a torsion bar which extends in the front-rear direction, and of which one of a front end portion and a rear end portion is supported by the axle in a state where movement in the front-rear direction and the left-right direction is restricted, in which one of a front end portion and a rear end portion of the leaf spring is connected to the vehicle body to be rotatable around an axis extending in the left-right direction, and the other of the front end portion and the rear end portion of the leaf spring is connected to the vehicle body to be swingable in the front-rear direction around an axis extending in the left-right direction, and the other of the front end portion and the rear end portion of the torsion bar is supported by the vehicle body to be movable in the front-rear direction in a state where movement in the left-right direction is restricted.

One of the front end portion and the rear end portion of the torsion bar is supported by the axle in a state where movement in the front-rear direction X and the left-right direction Y is restricted, and the other of the front end portion and the rear end portion of the torsion bar is supported by the vehicle body to be movable in the front-rear direction in a state where movement in the left-right direction Y is restricted. Therefore, when the vehicle body and the axle are moved relative to each other in the up-down direction while bending and deforming the leaf spring in the up-down direction, the other of the front end portion and the rear end portion of the torsion bar can be moved in the front-rear direction with respect to the vehicle body by following the expansion and contraction deformation of the leaf spring in the front-rear direction, and it is possible to deform the leaf spring as designed. As a result, when the vehicle body and the axle are moved relative to each other in the up-down direction, it is possible to relatively smoothly move the vehicle body and the axle in the front-rear direction, and it is possible to prevent the deterioration of the riding comfort.

The suspension device may further include a support tube into which the other of the front end portion and the rear end portion of the torsion bar is fitted to be slidable in the front-rear direction, and the support tube may be connected to the vehicle body to be swingable in the front-rear direction around a rotation axis extending in the left-right direction.

The support tube into which the other of the front end portion and the rear end portion of the torsion bar is fitted to be slidable in the front-rear direction is connected to the vehicle body to be swingable in the front-rear direction around the rotation axis extending in the left-right direction. Therefore, when the vehicle body and the axle are moved relative to each other in the up-down direction, it is possible to slide the other of the front end portion and the rear end portion of the torsion bar in the front-rear direction with respect to the support tube while allowing the support tube to swing in the front-rear direction around the rotation axis. As a result, the frictional force generated between the support tube and the other of the front end portion and the rear end portion of the torsion bar is suppressed, and it is possible to more smoothly move the vehicle body and the axle relative to each other in the front-rear direction.

A transverse cross-sectional shape of an outer peripheral surface of the torsion bar may be a polygon shape, or an oval shape or an elliptical shape elongated in the left-right direction.

The transverse cross-sectional shape of the outer peripheral surface of the torsion bar is a polygon shape, or an oval shape or an elliptical shape elongated in the left-right direction. Therefore, the torsional rigidity of the torsion bar can be increased, and the roll rigidity and the lateral rigidity between the vehicle body and the axle can be improved. In addition, it is possible to easily restrict the rotational movement of the torsion bar with respect to the support tube around the central axis, and it is possible to reliably improve the roll rigidity.

### [Advantageous Effects of Invention]

According to the present invention, the leaf spring can be deformed as designed when the vehicle body and the axle are moved relative to each other in the up-down direction.

### [Brief Description of Drawings]

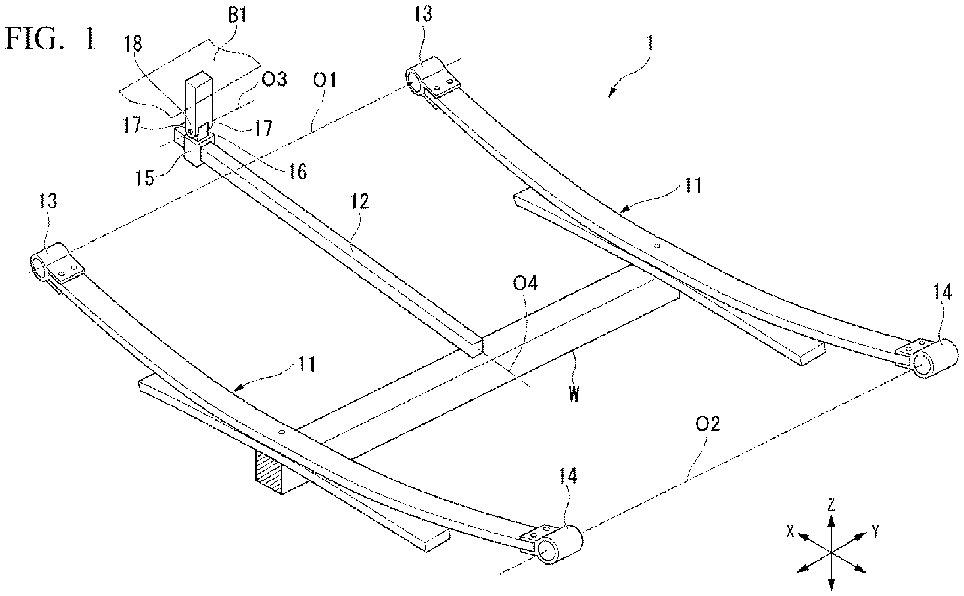

FIG. 1 is a perspective view of a suspension device according to an embodiment.

### [Description of Embodiments]

Hereinafter, an embodiment of a suspension device will be described with reference to FIG. 1.

The suspension device 1 includes a pair of leaf springs 11 and a torsion bar 12. The suspension device 1 is used in a state where longitudinal directions of the leaf spring 11 and the torsion bar 12 match a front-rear direction X of a vehicle, in which the leaf springs 11 support an axle W extending in a left-right direction Y of the vehicle and the torsion bar 12 connects the axle W and a vehicle body B1 to each other in the front-rear direction X.

The pair of leaf springs 11 are provided with an interval in the left-right direction Y. A central region of the leaf spring 11 in the front-rear direction X supports the axle W, and the leaf spring 11 is capable of being bent and deformed in an up-down direction Z. The leaf spring 11 supports the axle W from above the axle W. The leaf spring 11 may support the axle W from below the axle W.

The leaf spring 11 is formed of, for example, a fiber-reinforced resin. Examples of fibers contained in the fiber-reinforced resin include a glass fiber, a carbon fiber, and the like. In the shown example, the leaf spring 11 is formed of fiber-reinforced resin containing glass fibers. The fibers are contained in the resin in a state of being substantially extended in the front-rear direction X.

The leaf spring 11 may be formed of a metal or the like.

In a state where the leaf spring 11 is mounted onto the vehicle, the leaf spring 11 extends upward toward outer end portions from the central region in the front-rear direction X and is curved in a curved-surface shape protruding downward.

The leaf spring 11 may extend straight in the front-rear direction X in a state where the leaf spring 11 is mounted onto the vehicle. The leaf spring 11 may extend downward toward the outer end portions from the central region in the front-rear direction X and may be curved in a curved-surface shape protruding upward.

One of a front end portion and a rear end portion of the leaf spring 11 is connected to the vehicle body B1 to be rotatable around a first axis (axis) O1 extending in the left-right direction Y, and the other of the front end portion and the rear end portion of the leaf spring 11 is connected to the vehicle body B1 to be swingable in the front-rear direction X around an axis (not shown) extending in the left-right direction Y.

In the shown example, the front end portion of the leaf spring 11 is attached to the vehicle body B1 via a first eyebolt portion 13, and the rear end portion of the leaf spring 11 is attached to the vehicle body B1 via a second eyebolt portion 14. The first eyebolt portion 13 and the second eyebolt portion 14 are formed separately from the leaf spring 11. The first eyebolt portion 13 and the second eyebolt portion 14 may be formed integrally with the leaf spring 11.

The first eyebolt portion 13 is connected to the vehicle body B1 to be rotatable around the first axis O1 extending in the left-right direction Y.

The second eyebolt portion 14 is connected to the vehicle body B1 via a coupling piece (not shown). The coupling piece extends in the up-down direction Z. An upper end portion of the coupling piece is connected to the vehicle body B1 to be rotatable around an axis (hereinafter, also referred to as a third axis) (not shown) extending in the left-right direction Y, and a lower end portion of the coupling piece is connected to the second eyebolt portion 14 to be rotatable around a second axis O2 extending in the left-right direction Y. From the above, the second eyebolt portion 14 is provided to be swingable in the front-rear direction X around the third axis positioned above the second axis O2.

The second eyebolt portion 14 may be directly connected to the vehicle body B1 to be rotatable around the second axis 02, and the first eyebolt portion 13 may be connected to the vehicle body B1 via a coupling piece to be swingable in the front-rear direction X.

One of a front end portion and a rear end portion of the torsion bar 12 is supported by the axle W in a state where movement in the front-rear direction X and the left-right direction Y is restricted, and the other of the front end portion and the rear end portion of the torsion bar 12 is supported by the vehicle body B1 to be movable in the front-rear direction X in a state where movement in the left-right direction Y is restricted.

The torsion bar 12 is provided at a center portion of each of the vehicle body B1 and the axle W in the left-right direction Y. The torsion bar 12 may be provided at a position separated in the left-right direction Y from the center portion of each of the vehicle body B1 and the axle W in the left-right direction Y.

The torsion bar 12 extends straight in the front-rear direction X when viewed in the up-down direction Z. The torsion bar 12 extends to the upper side as it goes forward.

The torsion bar 12 may extend to the left side or the right side as it goes forward. The torsion bar 12 may extend to the lower side as it goes forward. The torsion bar 12 may be provided such that the position of the torsion bar 12 in the up-down direction Z is the same over the entire length in the front-rear direction X.

In the shown example, the rear end portion of the torsion bar 12 is fixed to the axle W, and the front end portion of the torsion bar 12 is supported by the vehicle body B1. The rear end portion of the torsion bar 12 is fixed to the axle W by, for example, welding, a fastening member, or the like.

The rear end portion of the torsion bar 12 may be supported by the axle W to be rotatable around an axis extending in the left-right direction Y. In addition, the front end portion of the torsion bar 12 may be supported by the axle W, and the rear end portion of the torsion bar 12 may be supported by the vehicle body B1.

The suspension device 1 includes a support tube 15 into which the front end portion of the torsion bar 12 (the other of the front end portion and the rear end portion of the torsion bar 12) is fitted to be slidable in the front-rear direction X. The support tube 15 is connected to the vehicle body B1 to be swingable in the front-rear direction X around a rotation axis O3 extending in the left-right direction Y. The rotation axis O3 is positioned above the support tube 15. The support tube 15 and the torsion bar 12 are disposed coaxially with a common axis O4 extending in the front-rear direction X.

Stopper portions may be provided on the support tube 15 and the torsion bar 12, respectively, the stopper portions that are engaged with each other to prevent the torsion bar 12 from escaping from the support tube 15 in the front-rear direction X.

A supported protrusion 16 that protrudes upward is formed on the upper end portion of the support tube 15. A pair of support protrusions 17 that protrude downward and sandwich the supported protrusion 16 in the left-right direction Y are provided on the vehicle body B1. The upper portions of the pair of support protrusions 17 are connected to each other in the left-right direction Y.

A rotation shaft 18 that is disposed coaxially with the rotation axis 03 integrally penetrates the supported protrusion 16 and the pair of support protrusions 17 in the left-right direction Y. The support tube 15 swings with respect to the vehicle body B1 in the front-rear direction X around the rotation axis 03 by the rotation of the supported protrusion 16 around the rotation axis O3 with respect to the pair of support protrusions 17.

The transverse cross-sectional shape of an outer peripheral surface of the torsion bar 12 is a polygon shape, or an oval shape or an elliptical shape elongated in the left-right direction Y. In the shown example, the transverse cross-sectional shape of the outer peripheral surface of the torsion bar 12 is a rectangular shape composed of four sides. Among these four sides, a pair of sides extend in the left-right direction Y, and the remaining pair of sides extend in the up-down direction Z.

A transverse cross-sectional shape of the outer peripheral surface of the torsion bar 12 may be, for example, a polygon shape elongated in the left-right direction Y, or a circular shape.

The front end portion of the torsion bar 12 is fitted into the support tube 15 to be slidable in the front-rear direction X in a state where the rotational movement in a circumferential direction of the common axis 04 is restricted. In the shown example, the transverse cross-sectional shape of the inner peripheral surface of the support tube 15 is the same as the transverse cross-sectional shape of the outer peripheral surface of the torsion bar 12.

In a case where each of the transverse cross-sectional shapes of the inner peripheral surface of the support tube 15 and the outer peripheral surface of the torsion bar 12 is circular, uneven portions may be formed on the inner peripheral surface of the support tube 15 and the outer peripheral surface of the torsion bar 12, respectively, the uneven portions that are engaged with each other to restrict the relative rotation of the support tube 15 and the torsion bar 12 in the circumferential direction of the common axis O4.

When the vehicle body B1 and the axle W are moved relative to each other in the up-down direction Z, the leaf spring 11 is bent and deformed in the up-down direction Z and is expansion/contraction-deformed in the front-rear direction X, while the first eyebolt portion 13 rotates around the first axis O1 and the second eyebolt portion 14 swings in the front-rear direction X around the third axis positioned above the second axis 02.

As described above, in the suspension device 1 according to the present embodiment, the rear end portion of the torsion bar 12 is supported by the axle W in a state where movement in the front-rear direction X and the left-right direction Y is restricted, and the front end portion of the torsion bar 12 is supported by the vehicle body B1 to be movable in the front-rear direction X in a state where movement in the left-right direction Y is restricted.

Therefore, when the vehicle body B1 and the axle W are moved relative to each other in the up-down direction Z while bending and deforming the leaf spring 11 in the up-down direction Z, the front end portion of the torsion bar 12 can be moved in the front-rear direction X with respect to the vehicle body B1 by following the expansion and contraction deformation of the leaf spring 11 in the front-rear direction X, and it is possible to deform the leaf spring 11 as designed. As a result, when the vehicle body B1 and the axle W are moved relative to each other in the up-down direction Z, it is possible to relatively smoothly move the vehicle body B1 and the axle W in the front-rear direction X, and it is possible to prevent the deterioration of the riding comfort.

The support tube 15 in which the front end portion of the torsion bar 12 is fitted to be slidable in the front-rear direction X is connected to the vehicle body B1 to be swingable in the front-rear direction X around the rotation axis O3 extending in the left-right direction Y. Therefore, when the vehicle body B1 and the axle W are moved relative to each other in the up-down direction Z, it is possible to slide the front end portion of the torsion bar 12 in the front-rear direction X with respect to the support tube 15 while allowing the support tube 15 to swing in the front-rear direction X around the rotation axis 03. As a result, the frictional force generated between the support tube 15 and the front end portion of the torsion bar 12 is suppressed, and it is possible to more smoothly move the vehicle body B1 and the axle W relative to each other in the front-rear direction X.

The transverse cross-sectional shape of the outer peripheral surface of the torsion bar 12 is a polygon shape, or an oval shape or an elliptical shape elongated in the left-right direction Y. Therefore, the torsional rigidity of the torsion bar 12 can be increased, and the roll rigidity and the lateral rigidity between the vehicle body B1 and the axle W can be improved. In addition, it is possible to easily restrict the rotational movement of the torsion bar 12 with respect to the support tube 15 around the common axis 04, and it is possible to reliably improve the roll rigidity.

The technical scope of the present invention is not limited to the above-described embodiments, and various modifications can be made within the scope not departing from the meaning of the present invention.

For example, the support tube 15 may be fixed to the vehicle body B1.

The other of the front end portion and the rear end portion of the torsion bar 12 may be supported by the vehicle body B1 via a coupling piece extending in the up-down direction Z to be swingable in the front-rear direction X. In this configuration, the upper end portion of the coupling piece is connected to the vehicle body B1 to be rotatable around a rotation axis extending in the left-right direction Y, and the lower end portion of the coupling piece is connected to the other of the front end portion and the rear end portion of the torsion bar 12 to be rotatable around a rotation axis extending in the left-right direction Y.

Furthermore, the components in the above-described embodiments can be appropriately replaced with well-known components within a range not departing from the meaning of the present invention, and the embodiments and modified examples described above may be appropriately combined.

### [Industrial Applicability]

According to the present invention, the leaf spring can be deformed as designed when the vehicle body and the axle are moved relative to each other in the up-down direction.

### [Reference Signs List]

1 Suspension device
11 Leaf spring
12 Torsion bar
15 Support tube
B1 Vehicle body
O1 First axis (axis)
O3 Rotation axis
W Axle
X Front-rear direction
Y Left-right direction
Z Up-down direction

## Claims

1. A suspension device comprising:
a pair of leaf springs which extend in a front-rear direction, are disposed to be spaced apart from each other in a left-right direction, are attached to a vehicle body, and are configured to support an axle; and
a torsion bar which extends in the front-rear direction, and of which one of a front end portion and a rear end portion is supported by the axle in a state where movement in the front-rear direction and the left-right direction is restricted,
wherein one of a front end portion and a rear end portion of the leaf spring is connected to the vehicle body to be rotatable around an axis extending in the left-right direction, and the other of the front end portion and the rear end portion of the leaf spring is connected to the vehicle body to be swingable in the front-rear direction around an axis extending in the left-right direction, and
the other of the front end portion and the rear end portion of the torsion bar is supported by the vehicle body to be movable in the front-rear direction in a state where movement in the left-right direction is restricted.

2. The suspension device according to Claim 1, further comprising:
a support tube into which the other of the front end portion and the rear end portion of the torsion bar is fitted to be slidable in the front-rear direction,
wherein the support tube is connected to the vehicle body to be swingable in the front-rear direction around a rotation axis extending in the left-right direction.

3. The suspension device according to Claim 1 or 2, wherein a transverse cross-sectional shape of an outer peripheral surface of the torsion bar is a polygon shape, or an oval shape or an elliptical shape elongated in the left-right direction.
